# EUROPÄISCHE PATENTSCHRIFT

(11) **EP 1 436 105 B1**
(45) Veröffentlichungstag und Bekanntmachung des Hinweises auf die Patenterteilung: **18.05.2005**
(21) Anmeldenummer: 02779447.8
(22) Anmeldetag: 01.10.2002
(51) Int. Cl.: B21J 15/02

(54) **VERBUNDBAUTEIL UND VERFAHREN ZU DESSEN HERSTELLUNG**
COMPOSITE PART AND METHOD FOR THE PRODUCTION THEREOF
ELEMENT COMPOSITE ET SON PROCEDE DE PRODUCTION

(30) Priorität: 09.10.2001 DE 10149633
(43) Veröffentlichungstag der Anmeldung: 14.07.2004
(73) Patentinhaber: BASF AKTIENGESELLSCHAFT, 67056 Ludwigshafen (DE)
(72) Erfinder: ENDEMANN, Ulrich, 67278 Bockenheim (DE); GLASER, Stefan, 67105 Schifferstadt (DE); VÖLKER, Martin, 67549 Worms (DE)
(86) Internationale Anmeldenummer: PCT/EP2002/010983
(87) Internationale Veröffentlichungsnummer: WO 2003/031095

(56) Entgegenhaltungen:
- EP-A- 1 078 701
- DE-A- 10 014 332
- DE-A- 19 853 030

## Beschreibung

Die Erfindung bezieht sich auf ein Verbundbauteil, insbesondere auf eine Form- und Kraftschluss aufweisende Kunststoff/Metallverbindung, ein Verfahren zu dessen Herstellung sowie auf die Verwendung dieser Verbundbauteile als Bauteile oder Bauteilkomponenten im Automobil-, Flugzeug- oder Schiffbau oder bei der Herstellung von Haushalts- oder Elektrogeräten. Außerdem betrifft die Erfindung Frontendmodule, Frontendträger, Sitzschalen, Sitzstrukturen, Seitentüren, Instrumententafelträger, Türfunktionsträger, Türfunktionsmodule, Heckklappen, Waschmaschinen, Kühlschränke oder Spülmaschinen enthaltend das erfindungsgemäße Verbundbauteil.

EP-A 0 370 342 bezieht sich auf ein Leichtbauteil. Dieses verfügt über einen schalenförmigen Grundkörper, dessen Innenraum Verstärkungsrippen aufweist, welche mit dem Grundkörper fest verbunden sind. Die Verstärkungsrippen bestehen aus angespritztem Kunststoff, wobei deren Verbindung mit dem Grundkörper an diskreten Verbindungsstellen über Durchbrüche im Grundkörper erfolgt, durch welche der Kunststoff hindurch- und über deren Flächen er hinausreicht. Dieses Verfahren des Anspritzens der Kunststoffformassen an das ins Spritzgießwerkzeug eingelegte Metallblech ist sehr komplex und toleranzempfindlich. Es erfordert einen hohen werkzeugtechnischen Aufwand. Ein hoher Anteil an Ausschussware lässt sich häufig nicht vermeiden. Außerdem benötigt man für jede neue Modellvariante bzw. -änderung ein neues, zumeist kompliziertes Spritzgießwerkzeug, was das Verfahren nochmals verteuert. Eine Serienfertigung ist daher häufig mit unwägbaren Risiken behaftet.

In der europäischen Patentanmeldung EP-A 1 084 816 werden weitere Metall/Kunststoff-Verbindungstechniken beschrieben. Diese sollen zu einem geringeren Anteil an Produktausschuss führen. Beispielsweise wird das partielle oder vollflächige Verkleben von Metall und Kunststoff in den Kontaktbereichen, das nachträgliche Ausbilden von Kunststoffnieten mittels Aufschmelzens an den Durchbrüchen des Metallblechs, das Verbinden mit Schrauben oder Schnapphaken sowie das Zusammenfügen durch Umbördeln von Laschen am Metallblech im Bereich der Ränder oder Durchbrüche der Kunststoffstruktur offenbart. Diese Verbindungstechniken machen jedoch entweder die Verwendung weiterer Materialien, z.B. Klebstoffe oder Schrauben, oder zusätzlicher Verfahrensschritte erforderlich.

Schließlich lässt sich mittels eines weiteren Verfahrens, das in der noch unveröffentlichten deutschen Patentanmeldung mit dem Aktenzeichen 100 14 332.6 beschrieben ist, ein Verbundbauteil herstellen, welches einen Hohlprofil-Grundkörper umfasst. Der Hohlprofil-Grundkörper weist einen Hohlprofilquerschnitt auf, der nach dem IHU-Verfahren (Innenhochdruck-Umformen) hergestellt werden kann. Mindestens ein Kunststoffelement wird mit dem Hohlprofil-Grundkörper fest verbunden. Das Kunststoffelement ist an den Hohlprofil-Grundkörper angespritzt und dessen Verbindung mit dem Hohlprofil-Grundkörper erfolgt an diskreten Verbindungsstellen durch teilweises oder vollständiges Ummanteln des Hohlprofil-Grundkörpers.

EP-A-1078701 zeigt auch die Herstellung eines Verbundbauteils aus einem Metallbauteil und einer Kunststoffstruktur.

Gemäß der vorstehend skizzierten Verfahren gefertigte Kunststoff-Metallverbundbauteile, die auch als Hybride oder Hybridbauteile bezeichnet werden, finden in entsprechender Gestaltung Verwendung bei Kraftfahrzeugen. Die Hybridbauteile weisen im allgemeinen einen schalenförmigen Grundkörper oder ein Hohlprofil aus Metall und eine damit fest verbundene Kunststoffstruktur auf. Der metallische Grundkörper gibt dem Verbundbauteil die grundlegende Steifigkeit und Festigkeit. Die Kunststoffstruktur dient zum einen der weiteren Erhöhung der Steifigkeit und Festigkeit, zum anderen der Funktionsintegration im Sinne einer System- und Modulbildung, ferner einer Gewichtsreduzierung. Besonders geeignete Anwendungen für Hybridbauteile sind im Automobilbau beispielsweise die Frontendträger bzw. Frontendmodule, Instrumententafelmodule bzw. Instrumententafelträger, Türfunktionsträger bzw. Türmodule und gleichartige Bauteile für Heckklappen bzw. Hecktüren.

Angesichts der aufgezeigten Lösungen des Standes der Technik lag der Erfindung die Aufgabe zugrunde, ein Hybridbauteil unter Anwendung eines wirtschaftlich verfügbaren Fügeverfahrens bereitzustellen, wobei das Hybridbauteil sich bei vergleichbarem Gewicht durch erhöhte Steifigkeit und Festigkeit auszeichnet und ohne weiteres für eine Serienfertigung geeignet ist.

Erfindungsgemäß wird diese Aufgabe durch ein Verfahren zur Herstellung eines Verbundbauteiles aus einem Metallbauteil und einer Kunststoffstruktur gelöst, wobei man das Metallbauteil, das über mindestens eine Fläche mit mindestens einem Stanzrand oder Stanzkragen verfügt, und die Kunststoffstruktur mit Hilfe eines oder mehrerer Fügewerkzeuge zusammenpresst, wobei der Stanzrand/-kragen form- und kraftschlüssig in die Kunststoffstruktur eindringt oder diese durchdringt.

An der Fügestelle lässt sich durch Zusammenpressen von Kunststoffstruktur und Metallbauteil eine dauerhafte form- und kraftschlüssige Verbindung erzielen.

Für das Fügen, d.h. das Zusammenpressen von Metallbauteil und Kunststoffstruktur können übliche, zur Blechbearbeitung bzw. -umformung geeignete Pressen bzw. Stanz- und/oder Tiefziehmaschinen oder ähnliche, hydraulisch oder nach einem anderen Wirkprinzip arbeitende Fügemaschinen verwendet werden. Diese Maschinen sind in der Regel mit einem oder mehreren Werkzeugen bestückt, die der Kontur des bzw. der Verbundbauteile zumindest von der Seite der Kunststoffstruktur sowie insbesondere im Bereich der Fügepunkte möglichst angepasst sind. Üblicherweise ist beim Fügen zur Vermeidung von Brüchen oder Rissen darauf zu achten, dass das Metallbauteil und die gegenüberliegende Kunststoffstruktur an der oder den Verbindungs-/Fügestellen bzw. in deren jeweiliger unmittelbarer Umgebung direkt und plan mit ihren jeweiligen Rückseiten am Werkzeug anliegen bzw. die jeweiligen Werkzeuge in diesen Bereichen entsprechend geformte Auflage- oder Druckpunkte haben.

Zur Herstellung höherer Stückzahlen können die Fügemaschinen mit einem oder mit mehreren Werkzeugen bestückt sein, die den Konturen der jeweils zu fügenden Komponenten der Hybridbauteile, d.h. der Verbundbauteile, zumindest von der Seite der Kunststoffstruktur sowie insbesondere im Bereich der Fügepunkte möglichst genau angepasst sind, wobei die Fügekraft in optimaler Weise derart eingeleitet wird, dass der metallische Körper auf der einen Werkzeugseite und der gegenüberliegende Kunststoffkörper zumindest an den Verbindungsstellen bzw. in deren unmittelbarer Nachbarschaft an der anderen Werkzeugseite am Werkzeug anliegen.

Liegen auf einem Metallbauteil mehrere Stanzränder/-kragen vor, können diese gleichzeitig wie auch, insbesondere bei großformatigen Verbundbauteilen, z.B. Frontend-Modulen, sequentiell in die Kunststoffstruktur eingepresst werden. Gleiches trifft auch auf Verbundbauteile zu, bei denen die Fügepunkte nicht in einer Ebene, sondern auf einer gekrümmten Fläche oder Linie liegen. Für den Fall des sequentiellen Einpressens greift man bevorzugt auf Werkzeuge zurück, deren Kontur selber nicht eben ist, sondern eine kontinuierliche oder stufenweise Auswölbung aufweist. Beim sequentiellen Einpressen bzw. Fügen werden Stanzkragen, die sich z.B. im Randbereich der Fügewerkzeugfläche befinden, gegebenenfalls nur teilweise eingepresst. Dieser nur teilweise gefügte Stanzkragen kann dann bei nachfolgenden Fügevorgängen in einem Mal oder Stück für Stück über mehrere Fügevorgänge vollständig in die Kunststoffstruktur eingepresst werden, wobei man das Fügewerkzeug regelmäßig jeweils neu positioniert. Für das sequentielle Stanzkragenfügen empfiehlt sich beispielsweise die Verwendung eines zangenartigen Fügewerkzeuges, das auch robotergesteuert eingesetzt werden kann.

In einer weiteren Ausführungsform der Erfindung wird der Fügevorgang nicht durch eine separate Fügemaschine, sondern in der Spritzgießmaschine, in der man zuvor die Kunststoffstruktur des Verbundbauteils spritzgegossen hat, vorgenommen. Dazu öffnet man nach dem Spritzgießen der Kunststoffstruktur das Spritzgießwerkzeug, wobei die Kunststoffstruktur in der Werkzeugform verbleibt. In das geöffnete Spritzgießwerkzeug, d.h. zwischen die beiden Werkzeughälften des Spritzgießwerkzeuges, wird das zu fügende Metallbauteil, das über mindestens eine Fläche mit einem Stanzrand verfügt, eingeführt und relativ zur Kunststoffstruktur in die gewünschte Fügeposition gebracht. Der bzw. die Stanzränder befinden sich auf der der Kunststoffstruktur zugewandten Seite. Indem die beiden Werkzeughälften der Spritzgießmaschine wieder zusammenfahren, werden der bzw. die Stanzränder in die Kunststoffstruktur eingepresst und bilden eine kraft- und formschlüssige Verbindung. Aus der erneut geöffneten Spritzgießmaschine lässt sich dann bereits das erfindungsgemäße Verbundbauteil entnehmen.

Es hat sich als vorteilhaft erwiesen, vor dem Schließ- bzw. Fügevorgang der Spritzgießmaschine zwischen Metallbauteil und rückseitiger Spritzgießwerkzeughälfte eine verformungssteife bzw. stabile Matrize einzufügen und zu positionieren, deren Vorderseite insebesondere im Bereich der Fügepunkte vorteilhafterweise die Kontur des Metallbauteils aufnimmt und die sich rückseitig an der rückseitigen Spritzgießwerkzeughälfte, gegebenenfalls auch an der Werkzeugaufspannplatte dieser Spritzgießwerkzeughälfte abstützt. In diesem Fall liegt das Metallbauteil nicht unmittelbar an der rückseitigen Werkzeughälfte des Spritzgießwerkzeugs an, sondern die Rückseitenform des Metallbauteils wird durch die vorderseitige Oberfläche der Matrize aufgenommen. Diese Matrize steht beim Pressvorgang in mittelbarem oder unmittelbarem Kontakt mit der rückseitigen Werkzeughälfte des Spritzgießwerkzeugs. Der Druck der rückseitigen Spritzgießwerkzeughälfte kann z.B. über spezielle Auflagestempel auf Matrize und/oder rückseitiger Werkzeughälfte, die auch nachträglich nach dem Spritzgießen der Kunststoffstruktur eingefügt werden können, oder über den Werkzeugrahmen auf die Matrize übertragen werden. Des weiteren kann die Rückseite der Matrize die Oberflächenkontur der rückwärtigen Werkzeughälfte auch aufnehmen. In einer Ausführungsform können Metallbauteil und Matrize vor dem Einführen in das Spritzgießwerkzeug bereits passend aufeinander gelegt und anschließend in das geöffnete Spritzgießwerkzeug eingeführt und in die gewünschte Fügeposition gebracht und gegebenenfalls arretiert werden.

Das Fügen in der Spritzgießmaschine hat den Vorteil, den Fügevorgang ohne weiteres auch bei erhöhter Temperatur der Kunststoffstruktur durchführen zu können. Der Stanzrand dringt regelmäßig leichter in das noch warme Kunststoffmaterial ein, wodurch Beschädigungen an Metallbauteil und/oder Kunststoffstruktur sowie Ausschussware vermieden werden. Außerdem lässt sich der Fügevorgang auf einfache Weise bei jedem neu zu fügenden Verbundbauteil, z.B. mit Hilfe geeigneter Temperatursensoren, bei identischer Temperatur der Kunststoffstruktur durchführen, wodurch ein hohes Maß an Reproduzierbarkeit sichergestellt wird. Selbstverständlich ist auch von Vorteil, dass man eine separate Fügemaschine komplett einsparen kann.

Das Stanzkragenfügen, auch Stanzrandfügen genannt, in der Spritzgießmaschine empfiehlt sich insbesondere dann, wenn die Höhe des Stanzkragens geringer ist als die Dicke der Kunststoffstruktur an der zu fügenden Stelle, der Stanzrand also nur in die Kunststoffstruktur eindringt, diese jedoch nicht durchdringt.

Durch das Fügen lässt sich eine als Stanzkragen bzw. Stanzrand ausgeführte Erhebung im metallischen Grundkörper in der Wandung des Kunststoffbauteiles verspannen bzw. verkrallen, so dass eine form- und kraftschlüssige Verbindung entsteht. Durch den Fügevorgang kann es beim Eindringen in den Kunststoffkörper bereits zu Verformungen des Stanzrandes bzw. Stanzkragens kommen. Die Gestalt des durch die Fügeoperation verformten Vorsprungs kann einerseits durch den Anstellwinkel, die Höhe sowie den Querschnittsverlauf des unverformten Vorsprungs am metallischen Bauteil und andererseits durch die Gestaltung des Fügewerkzeuges beeinflusst werden.

Mit dem erfindungsgemäß vorgeschlagenen Verfahren können sowohl herkömmliche Kunststoffstrukturen, die z.B. Umgebungstemperatur aufweisen, als auch spritzfrische, werkzeugfallende Teile, die noch eine erhöhte Temperatur aufweisen und daher noch relativ weich sind, sowie nachträglich getemperte Kunststoffstrukturen, d.h. solche, die erst kurz vor dem Fügen auf eine erhöhte Temperatur gebracht worden sind, zu einer belastbaren Verbindung mit einem Metallbauteil zusammengefügt werden.

Solcherart erhaltene Hybridbauteile weisen gegenüber entsprechenden bekannten Konstruktionen bei gleichem Gewicht Vorteile hinsichtlich ihrer Steifigkeit bzw. Festigkeit auf.

Das Metallbauteil verfügt über mindestens eine Fläche, die einen Stanzrand/-kragen aufweist. Dieser Stanzrand bzw. Stanzkragen kann bereits direkt bei der Herstellung des Metallbauteils mitberücksichtigt oder nachträglich angebracht werden. Es handelt sich hierbei um einen Aufsatz, Vorsprung oder eine Erhebung, die geeignet ist, bei Druckanwendung in die Kunststoffstruktur einzudringen. Das Ende des Stanzrandes ist bevorzugt kantig ausgebildet, kann also z.B. im Querschnitt rechteckig, dreieckig oder trapezförmig gearbeitet sein.

Geeignete Stanzränder können dadurch erhalten werden, dass man sie nachträglich mittels bekannter Verfahren wie Löten oder Schweißen auf der Metalloberfläche anbringt. Des Weiteren können solche Stanzränder bereits bei der Herstellung der Metallstruktur berücksichtigt werden. Bevorzugt werden Stanzränder dadurch erhalten, dass man über Stanz- oder Tiefziehprozesse Durchbrüche in die Fläche des Metallbauteils einarbeitet. Je nach Wahl des Stanzwerkzeuges sind unterschiedlichste Durchbruchformen möglich, die sich dadurch auszeichnen, dass sie einen im wesentlichen senkrechten Stanzrand aufweisen, der den Durchbruch gegenüber der Metallfläche abgrenzt. Eine im wesentlichen senkrechte Stellung des Stanzrandes, unabhängig davon, ob als Durchbruch geformt oder separat oder einstückig hergestellt, im Sinne der vorliegenden Erfindung soll bedeuten, dass der Stanzrand in Bezug auf die Metallfläche des Metallbauteils bevorzugt einen Anstellwinkel von 60 bis 120°, insbesondere von 80 bis 100° einnimmt.

Der Stanzrand kann bei Draufsicht auf die Metallfläche der Form einer geraden oder wellen- oder winkelförmigen Linie nachgebildet sein oder die Form eines Rechtecks, Quadrats, Dreiecks, Ovals, Kreises oder einer sonstigen beliebigen geometrischen Figur annehmen. Daneben ist jede weitere denkbare Form möglich, soweit sie das Zusammenfügen mittels Zusammenpressens von Metallbauteil und Kunststoffstruktur zulässt. Es können auch zwei oder mehrere Stanzränder mit der selben oder mit unterschiedlichen Formen auf einer Metallfläche angebracht sein.

Die Dicke des Stanzrandes kann in großen Bereichen frei gewählt werden, solange die Kunststoffstruktur beim Pressvorgang nicht zerstört wird und ein Verbundbauteil zustande kommt. Die Dicke des Stanzrandes liegt in der Regel im Bereich von 0,2 bis 4 mm, bevorzugt sind Dicken im Bereich von 0,2 bis 2 mm, insbesondere von 0,4 bis 1,2 mm.

Die Höhe des Stanzrandes, gemessen von der Metallfläche, ist im allgemeinen bereits ausreichend, wenn sie der Dicke der Kunststoffstruktur an der zu verbindenden Stelle entspricht. Allerdings ist auch bereits mit geringeren Höhen, z.B. mit einer Höhe im Bereich der halben Dicke der Kunststoffstruktur an der zu fügenden Stelle eine dauerhafte Verbindung herbeizuführen.

Das Metallbauteil, auch metallischer Körper oder Metallkörper genannt, kann aus jedwedem Metall oder jedweder Legierung gefertigt sein. Es hat unter den Fügebedingungen eine Festigkeit aufzuweisen, die ausreicht, über die Stanzränder, falls diese aus dem gleichen Material bestehen, eine dauerhafte und formschlüssige Verbindung mit der Kunststoffstruktur eingehen zu können. Selbstverständlich kann die Höhe eines Stanzrandes auch in sich variieren.

In bevorzugter Weise beträgt die Wanddicke der Kunststoffstruktur mindestens 1 mm, bevorzugt mindestens 2 mm. Werden Kunststoffstrukturen in dieser Wanddicke mit Metallkörpern gemäß dem erfindungsgemäß vorgeschlagenen Verfahren gefügt, dringen die stanzkragenförmigen Erhebungen des Metallkörpers in die Kunststoffstruktur ein, so dass eine dauerhafte, form- und kraftschlüssige Verbindung erhalten wird.

Die Durchbrüche in den metallischen Körpern werden vorzugsweise kreisrund ausgeführt. Sie können z.B. auch oval oder als Rechteck mit gerundeten Ecken beschaffen sein. In vorteilhafter Weise lassen sich die Durchbrüche an den Randbereichen mit stanzkragenförmig konfigurierten Erhebungen ausführen, welche aus dem Metallblech getrieben und nach oben hin aufgebogen sind. Kragenförmige Erhebungen mit umlaufender Kante sind bevorzugt. Diese Kante ist insbesondere zur Erzielung eines verbesserten Eintretens in den Kunststoff scharfkantig ausgebildet. Im metallischen Grundkörper lassen sich die Durchbrüche beispielsweise durch Ausstanzen erzielen, wobei während des Stanzens eine Verformung der Randbereiche der Durchbrüche automatisch erfolgt. Neben dem Ausstanzen lassen sich im metallischen Grundkörper die Verformungen im Wege des Tiefziehens des metallischen Körpers formen. Scharfkantige Stanzrand- bzw. Stanzkragenenden sind insbesondere auch deshalb bevorzugt, da sich, wenn ein solcherart ausgestalteter Stanzkragen in die Kunststoffstruktur eindringt und diese nicht durchdringt, die Kunststoffstruktur rückseitig im Bereich der Fügestelle nicht oder nur geringfügig auswölbt. Als scharfkantig wird ein Stanzkragenende typischerweise dann bezeichnet, wenn die Kragenwand spitz oder nahezu spitz zuläuft, wobei deren Querschnittsform symmetrisch und unsymmetrisch sein kann.

Beim erfindungsgemäß vorgeschlagenen Verfahren kann die Höhe der Erhebungen am Metallkörper bzw. die Stanzkragenhöhe die Wanddicke der Kunststoffstruktur an der zu fügenden Stelle übersteigen; der Stanzrand bzw. Stanzkragen durchdringt in diesem Fall die Kunststoffstruktur, wenn er senkrecht oder nahezu senkrecht zur Metallfläche ausgerichtet ist. Bevorzugt wird in diesen Fällen, wenn Durchbrüche angestrebt werden, auf Stanzränder zurückgegriffen, deren Höhen die Dicke der Kunststoffstruktur an der Verbindungsstelle um 2 bis 40, bevorzugt um 5 bis 25 und besonders bevorzugt um 10 bis 20 % übertreffen. Da beim Fügevorgang sowohl von der rückwärtigen Seite des Metallbauteils als auch der rückwärtigen Seite der Kunststoffstruktur durch in der Regel verformungsstabile Werkzeugwandungen, z.B. aus Metall, Druck aufgebaut und aufrechterhalten wird, verformen sich die überstehenden Stanzränder nach Durchdringung der Kunststoffstruktur an der gegenüberliegenden Pressplatte, wodurch eine noch form- und kraftschlüssigere Verbindung mit der Kunststoffstruktur entsteht.

Neben der Ausbildung der stanzkragenartigen Erhebungen am Metallkörper in einer die Wanddicke der Kunststoffstruktur übersteigenden Höhe können die stanzkragenförmigen Erhebungen auch in einer Höhe beschaffen sein, die unterhalb oder auf gleichem Niveau der Wanddicke der Kunststoffstruktur liegt, welche mit einem Metallkörper zu fügen ist. Auch in diesem Fall kommt durch das Zusammenpressen eine form- und kraftschlüssige Verbindung zustande.

Gemäß einer weiteren Ausgestaltungsvariante des der Erfindung zugrunde liegenden Gedankens lassen sich die Verformungen unter einem von 90° abweichenden Anstellwinkel im metallischen Körper vorsehen, so dass diese nahezu senkrecht zur Ebene des metallischen Körpers verlaufend hervorstehen. Durch die Wahl des Anstellwinkels der Vorsprünge in bezug auf die Ebene des metallischen Werkstückes, in welchem die Durchbrüche und damit die Verformungen erzeugt werden, kann die Gestalt der bei der Fügeoperation entstehenden Verbindungsstelle wesentlich beeinflusst werden. Je nach Anstellwinkel der Verformung am Metallbauteil kann die Verformungskontur der stanzkragenartigen Erhebung zum Beispiel in der Mitte oder am oberen Bereich aufgeweitet bzw. eingeengt sein. Daneben lässt sich die sich einstellende Verformungskontur zwischen metallischem Bauteil und Kunststoffstruktur im Bereich der Fügestelle der beiden Bauteilkomponenten durch die Konfiguration der die Fügestelle beaufschlagenden Auftrefffläche des entsprechenden kunststoffseitigen Fügewerkzeuges beeinflussen, wenn der Stanzrand höher ist als die Dicke der Kunststoffstruktur an der Fügestelle.

In bevorzugter Ausgestaltung des erfindungsgemäßen Verfahrens liegt der Durchmesserbereich der im metallischen Bauteil erzeugten Durchbrüche im Bereich von 2 bis 50, insbesondere von 2 bis 12 mm.

Bei der Herstellung der Durchbrüche wird die Kante bzw. Umlaufkante der die Durchbrüche begrenzenden Stanzkragen bzw. Stanzränder bevorzugt kantig, insbesondere scharfkantig ausgebildet, um ein Eintreten der Kante bzw. Umlaufkante in die Kunststoffstruktur beim Aufeinandertreffen der zu fügenden und ein Verbundbauteil bildenden Teilekomponenten zu ermöglichen.

In einer weiteren Ausführungsform werden zwei oder mehrere übereinander angebrachte Kunststoffstrukturen in einem Arbeitsgang durch Zusammenpressen mit einem Metallbauteil, das über mindestens einen Stanzrand verfügt, wie vorgehend beschrieben zu einem Verbundbauteil gefügt. Die Kunststoffstrukturen liegen zu diesem Zweck an der Fügestelle spielfrei übereinander, so dass eine kraft- und formschlüssige Verbindung möglich ist. Die Höhe des Stanzrandes ist derart einzustellen, dass das Stanzrandende die am Metallbauteil anliegende bzw. die anliegenden Kunststoffstrukturen durchdringt und in die äußere an der Fügewerkzeugwandung anliegende Kunststoffstruktur zumindest eindringt oder auch diese, bevorzugt unter Verformung des Stanzrandes, durchdringt.

In einer bevorzugten Ausführungsform verfügt der Stanzkragen bzw. Stanzrand auf mindestens einer seiner Seitenflächen über eine oder mehrere Einschnürungen, Einbuchtungen oder Vertiefungen. Diese Einschnürungen, Einbuchtungen oder Vertiefungen können abschnittsweise oder verteilt über die Seitenfläche(n) des Stanzkragens vorliegen. Bei umlaufenden Stanzkragen, z.B. bei kreisförmigen, recht- oder dreieckigen Stanzkragenformen, liegt die Einbuchtung, Einschnürung oder Vertiefung vorzugsweise umlaufend, z.B. in Form einer umlaufenden Rille oder Nut auf der/den Stanzkragenseitenflächen vor. Erfindungsgemäße Verbundbauteile, bei denen die Verbindung mit Hilfe der vorgenannte Einschnürungen, Einbuchtungen oder Vertiefungen aufweisenden Stanzkragen zustande kommt, zeigen eine besonders starke Verbindungsfestigkeit.

Die Einschnürung, Vertiefung oder Einbuchtung im Bereich der Stanzkragenseitenflächen kann auf vielfältige Art erzeugt werden, beispielsweise durch Eindrücken eines Gegenstandes in die rückseitig abgestützte Stanzkragenseitenfläche. Des Weiteren können diese Einbuchtungen auch schon auf dem noch nicht gestanzten Metallblech erzeugt werden, beispielsweise indem man verformungssteife Gegenstände, z.B. Ringe oder Ringsegmente, in die Metalloberfläche eindrückt bzw. einprägt. Außerdem kann man das Metallblech auf eine Unterlage, z.B. die untere Hälfte des zum Stanzen verwendeten Werkzeugs auflegen, das an den geeigneten bzw. gewünschten Stellen Erhebungen aufweist, welche bei rückseitiger Druckanwendung in das Metallblech gedrückt werden. Anschließend kann man den Stanzkragen an der vorgesehenen Position erzeugen, indem man einen Stempel an vorbezeichneter Stelle durch das Metallblech treibt, wonach sich die beschriebenen Einbuchtungen in der äußeren Stanzkragenwand befinden.

In einer bevorzugten Ausführungsform wird die Einschnürung unmittelbar bei der Herstellung des Stanzkragens in einem Arbeitsgang mit erzeugt. Dieses tritt z.B. dann ein, wenn die zur Kragenherstellung erforderliche Stempelkraft so hoch ist, dass es beim Durchstoßen des Stempels durch die Metallfläche zu einer beanspruchungsbedingten Querschnittseinschnürung im Bereich des sich bildenden Kragensockels kommt. Besonders vorteilhaft lassen sich die Einschnürungen unmittelbar beim Herstellprozess auch dann erzeugen, wenn der verwendete Stempel scharfkantige Querschnittsübergänge aufweist. Besonders bevorzugt treten diese Einschnürungen ebenfalls auf, wenn das Metallbauteil an der zu stanzenden Position bereits eine Öffnung oder einen Durchbruch aufweist, deren/dessen Größe bzw. Durchmesser gegenüber der/dem bei der eigentlichen Kragenherstellung erzeugten Durchbruchgröße/-durchmesser relativ klein ausfällt und bevorzugt nicht mehr als die halbe Größe/den halben Durchmesser des Stanzkragendurchbruchs ausmacht. Selbstverständlich lassen sich die vorgenannten bevorzugten Ausführungsformen zur Erzeugung von Einschnürungen, Einbuchtungen bzw. Vertiefungen im Stanzrand auch beliebig kombinieren.

In einer weiteren, bevorzugten Ausführungsform ist die Fläche des Metallblechs im Bereich um den Stanzkragen gegenüber der aus dem umgebenden Metallblech aufgespannten Fläche in Richtung des Stanzkragensockels ausgelenkt. Die Höhe des Stanzrandes bzw. Stanzkragens dieser Ausführungsform, bestimmt relativ zur nicht ausgelenkten, durch das umgebende Metallblech gebildeten Fläche, ist folglich geringer als die tatsächliche Höhe des Stanzrandes. Das Fügewerkzeug bildet in seiner Oberflächenkontur diese Auslenkung der Fläche um den Stanzrand vorzugsweise nicht nach. Auf diese Weise werden Verbundbauteile erhalten, bei denen Metallbauteil und Kunststoffstruktur sehr eng aneinander anliegen, so dass Fremdkörper oder Flüssigkeiten nicht in die Verbundstruktur eindringen oder eingelagert werden können. Spaltbildung zwischen diesen Bauteilen wird so wirkungsvoll unterbunden.

In einer weiteren, bevorzugten Ausführungsform kann man zusätzlich zum Stanzkragenfügen bzw. Stanzrandfügen die Verbindungsfestigkeit der erfindungsgemäßen Verbundbauteile dadurch nochmals erhöhen, dass das zu verbindende Metallbauteil und/oder die zu verbindende Kunststoffstruktur vollständig oder partiell vor dem Einpressen der Stanzkrägen/-ränder mit einem Kleber versehen werden. Geeignete Kleber zum Verbinden von Metall und Kunststoff sind dem Fachmann bekannt und im Handel erhältlich.

In einer weiteren Ausführungsform wird der gefügte Stanzrand im Bereich der Fügestelle im nachhinein, d.h. nach dem Fügevorgang mit einem Kleber oder einer Abdichtmasse verschlossen, bzw. abgedichtet. Wenn der Stanzkragen die Kunststoffstruktur durchdringt, empfiehlt es sich, den ober- und unterseitigen Stanzkragenbereich abzudichten. Dringt der Stanzkragen nur in die Kunststoffstruktur ein, ohne sie zu durchdringen, reicht es aus, nur den metallseitigen Stanzkragenbereich mit einer Kleber- oder Abdichtmasse zu versehen. Die vorgenannte Vorgehensweise ist insbesondere dann bevorzugt, wenn das Metallbauteil vor dem Fügevorgang einem Lakkierprozess unterzogen worden ist und eine Beschädigung bzw. Beeinträchtigung der vor Korrosion schützenden Lackschicht am Stanzrand/-kragen infolge des Fügeprozesses nicht ausgeschlossen werden kann

Anhand von Zeichnungen wird die Erfindung nachstehend näher erläutert.

Es zeigt:
- Figur 1: einen Metall-Grundkörper und die Kunststoffstruktur im Bereich der Verbindungsstelle vor dem Fügen,
- Figur 2: einen Metall-Grundkörper und die Kunststoffstruktur im Bereich der Verbindungsstelle nach dem Fügen mit form- und kraftschlüssiger Verbindung durch Aufweiten der stanzkragenartig konfigurierten Erhebung in seiner Mitte und Einengung am oberen Ende,
- Figur 3: einen Metall-Grundkörper und die Kunststoffstruktur im Bereich der Verbindungsstelle nach dem Fügen mit form- und kraftschlüssiger Verbindung durch Einengung des Stanzkragens in der Mitte und Aufweitung desselben am oberen Ende,
- Figur 4: einen Ausschnitt der oberen Hälfte des Fügewerkzeuges mit speziell umlaufender Ringnut in vergrößerter Darstellung,
- Figur 5: einen Metall-Grundkörper und die Kunststoffstruktur im Bereich der Verbindungsstelle nach dem Fügen mit form- und kraftschlüssiger Verbindung durch Aufweiten der aus der Kunststoffstruktur herausragenden stanzkragenartigen Erhebung an dessen oberen Ende,
- Figur 6: einen eine Einschnürung aufweisenden Stanzrand im Querschnitt,
- Figur 7: eine Kunststoffstruktur und ein Metallbauteil vor dem Fügevorgang im Querschnitt, wobei die Fläche des Metallbauteils im Bereich des Stanzkragens gegenüber der umgebenden Metallbauteilfläche in Richtung des Stanzkragensockels ausgelenkt ist,
- Figur 8: ein geöffnetes Spritzgießwerkzeug im Querschnitt mit einer in der Spritzform verbliebenen Kunststoffstruktur und einem auf einer Matrize vorliegenden Metallbauteil enthaltend Stanzränder, und
- Figur 9: drei Ausführungsformen eines Metallbauteils mit einem scharfkantigen, umlaufenden Stanzkragen.

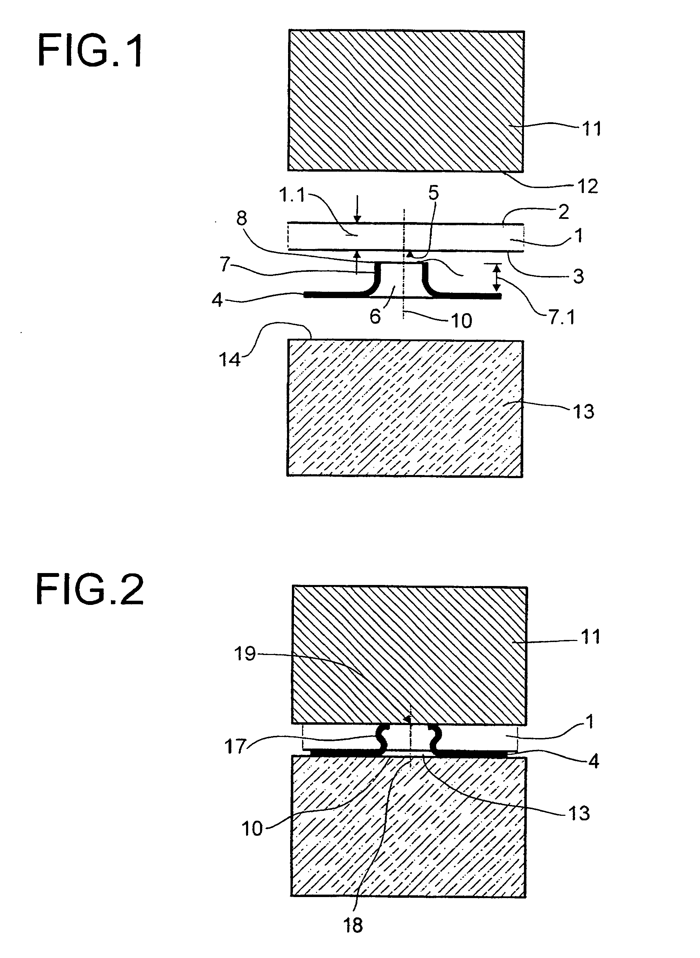

Aus der Darstellung gemäß Figur 1 gehen ein Metall-Grundkörper und die Kunststoffstruktur im Bereich der Verbindungsstelle vor dem Fügevorgang hervor.

In der Darstellung gemäß Figur 1 sind die Presswerkzeuge eines die Fügeoperation vornehmenden Werkzeugs im auseinandergef ahrenen Zustand wiedergegeben. Die beiden einander gegenüberliegenden Fügewerkzeuge, das obere Fügewerkzeug 11 und das untere Fügewerkzeug 13, weisen einander zuweisende Auftreffflächen 12 bzw. 14 auf. Zwischen den auseinander gefahrenen Auftreffflächen 12 bzw. 14 des oberen Fügewerkzeuges 11 und des unteren Fügewerkzeuges 13 befinden sich die beiden miteinander zu fügenden Teile des Verbundbauteiles, nämlich Kunststoffstruktur 1 sowie das metallische Bauteil 4.

Der Metallkörper oder das Metallblech 4 kann im Zuge von Stanzen oder Tiefziehen mit beispielsweise kreisförmig konfigurierten Durchbrüchen 6 versehen werden. Die kreisförmig konfigurierten Durchbrüche 6 werden bevorzugt im Durchmesserbereich von 2 bis 12 mm im metallischen Bauteil 4 ausgeführt, wobei zur Erzeugung derselben die genannten Verfahren zur Anwendung kommen können. Während der Anwendung des Stanzens bzw. des Tiefziehens entstehen seitlich an den Durchbrüchen 6 stanzkragenartig verlaufende Erhebungen 7, die in einer scharfen Umlaufkante 8 am oberen Ende des Durchbruches auslaufen. Der Durchbruch 6 wird im wesentlichen symmetrisch zu seiner Symmetrielinie 10 gefertigt. Die sich am oberen Ende 9 des stanzkragenartig konfigurierten verformten Bereiches 7 einstellende Umlaufkante 8 wird bevorzugt scharfkantig ausgebildet, um ein Eindringen der Verformung 7 an der Unterseite 3 der Kunststoffstruktur 1 zu ermöglichen.

Für das Zusammenpressen von Metallblech-Grundkörper 4 und Kunststoffstruktur 1 können zur Blechbearbeitung bzw. Blechumformung geeignete Pressen bzw. Stanz- und/oder Tiefziehmaschinen oder ähnliche hydraulisch wirkende Fügemaschinen verwendet werden. Diese werden in der Regel mit einem oder mehreren Werkzeugen 11 bzw. 13 bestückt, die der Kontur der miteinander zu verbindenden Bauteile 1 bzw. 4 genau angepasst sind. Zur optimalen Einleitung der Fügekraft beim Zusammenfügen der genannten Bauteile kommt es darauf an, dass sowohl der metallische Grundkörper 4 auf der einen Seite und die diesem gegenüberliegend angeordnete Kunststoffstruktur 1 auf der anderen Seite an den Verbindungsstellen, d. h. den Fügestellen bzw. in deren jeweiliger unmittelbarer Umgebung passgenau an der entsprechenden Werkzeugauftrefffläche 12 bzw. 14 anliegen.

Für das Metallbauteil kann im allgemeinen jedes Metall oder jede Metalllegierung verwendet werden, sofern diese im festen Zustand hart genug ist, um in die Kunststoffstruktur eingepresst werden zu können. Üblicherweise wird ein Metallbauteil aus unverzinktem oder verzinktem Stahl, Aluminium oder Magnesium verwendet. Das Metallbauteil kann aus Gründen des Korrosionsschutzes oder aus optischen Gründen auch mit einer handelsüblichen Lackschicht überzogen sein. Derartige Korrosionsschutz- oder Farbüberzüge sowie deren Anbringung sind dem Fachmann bekannt.

Als Kunststoffstrukturen kommen spritzgegossene, extrudierte oder tiefgezogene Formteile, einschließlich Folien und Halbzeuge (Tafeln, Rohre, Platten, Stäbe, etc.) in Frage. Die Kunststoffstrukturen sind üblicherweise aus thermoplastischen teilkristallinen oder amorphen Polymeren aufgebaut, können aber auch aus Duroplasten oder Mischungen dieser Polymerklassen gebildet werden.

Als thermoplastische Polymere kommen alle dem Fachmann bekannten Thermoplaste in Betracht. Geeignete thermoplastische Polymere werden beispielsweise im Kunststoff-Taschenbuch, Hrsg. Saechtling, 25. Ausgabe, Hanser-Verlag, München, 1992, insbesondere Kap. 4 sowie darin zitierte Verweise, und im Kunststoff-Handbuch, Hrsg. G. Becker und D. Braun, Bände 1 - 11, Hanser-Verlag, 1966 - 1996, beschrieben.

Exemplarisch seien als geeignete Thermoplaste genannt Polyoxyalkylene wie Polyoxymethylen, z.B. Ultraform® (BASF AG), Polycarbonate (PC), Polyester wie Polybutylenterephthalat (PBT), z.B. Ultradur® (BASF AG), oder Polyethylenterephthalat (PET), Polyolefine wie Polyethylen (PE) oder Polypropylen (PP), Poly(meth)acrylate, z.B. PMMA, Polyamide wie Polyamid-6 oder Polyamid-66, (z.B. Ultramid®; BASF AG), vinylaromatische (Co)polymere wie Polystyrol, syndiotaktisches Polystyrol, schlagzähmodifiziertes Polystyrol wie HIPS, oder ASA- (z.B. Luran® S; BASF AG), ABS- (z.B. Terluran®; BASF AG), SAN- (z.B. Luran®; BASF AG) oder AES-Polymerisate, Polyarylenether wie Polyphenylenether (PPE), Polyphenylensulfide, Polysulfone, Polyethersulfone, Polyurethane, Polylactide, halogenhaltige Polymerisate, Imidgruppen-haltige Polymere, Celluloseester, Silicon-Polymere und Thermoplastische Elastomere. Es können auch Mischungen unterschiedlicher Thermoplaste als Materialien für die Kunststoffstrukturen eingesetzt werden. Bei diesen Mischungen kann es sich um einoder mehrphasige Polymerblends handeln.

Die Kunststoffstrukturen können darüber hinaus übliche Zusatzstoffe und Verarbeitungshilfsmittel enthalten.

Geeignete Zusatzstoffe und Verarbeitungshilfsmittel sind z.B. Gleit- oder Entformungsmittel, Kautschuke, Antioxidantien, Stabilisatoren gegen Lichteinwirkung, Antistatika, Flammschutzmittel oder faser- und pulverförmige Füll- oder Verstärkungsmittel sowie andere Zusatzstoffe oder deren Mischungen.

Als Beispiele für faserförmige bzw. pulverförmige Füll- und Verstärkungsstoffe seien Kohlenstoff- oder Glasfasern in Form von Glasgeweben, Glasmatten oder Glasseidenrovings, Schnittglas sowie Glaskugeln genannt. Besonders bevorzugt sind Glasfasern. Die verwendeten Glasfasern können aus E-, A- oder C-Glas sein und sind vorzugsweise mit einer Schlichte, z.B. auf Epoxyharz-, Silan-, Aminosilan- oder Polyurethanbasis und einem Haftvermittler auf der Basis funktionalisierter Silane ausgerüstet. Die Einarbeitung der Glasfasern kann sowohl in Form von Kurzglasfasern als auch in Form von Endlossträngen (rowings) erfolgen.

Als teilchenförmige Füllstoffe eignen sich z.B. Ruß, Graphit, amorphe Kieselsäure, Whisker, Aluminiumoxidfasern, Magnesiumcarbonat (Kreide), gepulverter Quarz, Glimmer, Mica, Bentonite, Talkum, Feldspat oder insbesondere Calciumsilikate wie Wollastonit und Kaolin.

Des weiteren können die Kunststoffstrukturen auch Farbmittel oder Pigmente enthalten.

Bevorzugt werden die vorgenannten Zusatzstoffe, Verarbeitungshilfsmittel und/oder Farbmittel in einem Extruder oder einer anderen Mischvorrichtung bei Temperaturen von 100 bis 320°C unter Aufschmelzen des thermoplastischen Polymeren vermischt und ausgetragen. Die Verwendung eines Extruders ist besonders bevorzugt, insbesondere eines gleichsinnig drehenden, dicht kämmenden Zweischnecken-Extruders. Verfahren zur Herstellung der Kunststoffformmassen sind dem Fachmann hinlänglich bekannt.

Aus den so erhaltenen Formmassen lassen sich Kunststoffstrukturen (auch Halbzeuge) aller Art herstellen, z.B. nach dem Spritzgieß-, Extrusions- oder Tiefziehverfahren.

Aus der Darstellung gemäß Figur 1 gehen ferner die Wandungsdicke 1.1 der Kunststoffstruktur 1 zwischen Oberseite 2 und Unterseite 3 näher hervor wie auch die Höhe der stanzkragenartig ausgebildeten Erhebungen 7 am metallischen Grundkörper 4. Bevorzugte Werte für die Wandungsstärke 1.1 des Kunststoffkörpers liegen zwischen 2 und 8 mm. Die mit 7.1 bezeichnete Höhe der stanzkragenartig verformten Ränder der Durchbrüche 6 kann die Kunststoffwanddicke 1.1 im Ausgangszustand, d. h. im unverformten Zustand übersteigen, bevorzugt um etwa 10 - 30 %. Der Prozentsatz kann je nach Ausführungsform variieren.

Figur 2 zeigt einen Metall-Grundkörper und die Kunststoffstruktur im Bereich der Verbindungsstelle nach dem Fügen in form- und kraftschlüssiger Verbindung durch Aufweiten der stanzkragenartigen Erhebung in seiner Mitte und Einengung der stanzkragenartigen Erhebung am oberen Ende.

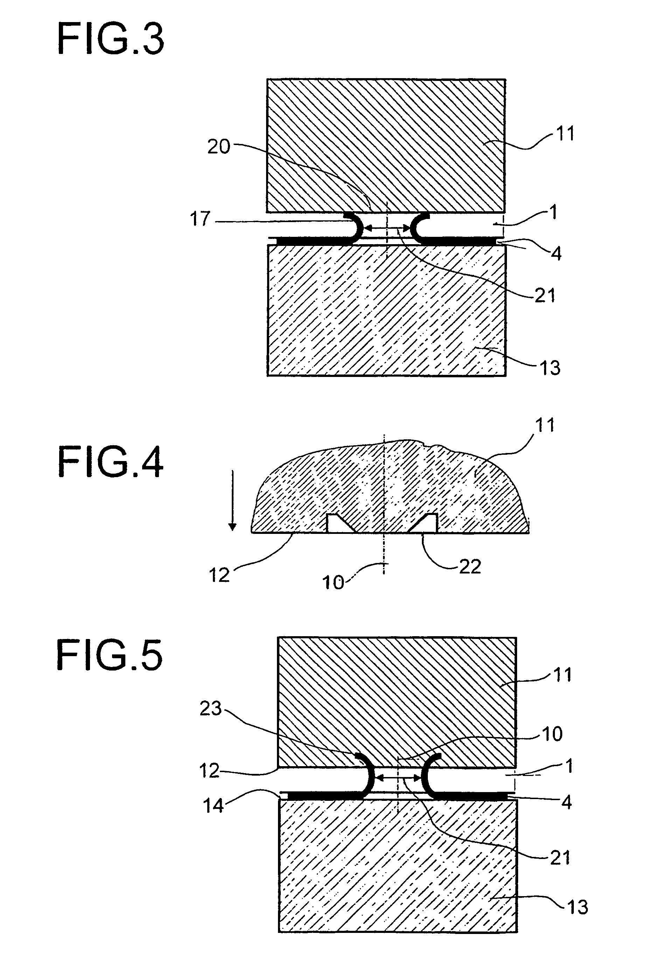

Durch die vorstehend beschriebene Überhöhung der Randbereiche 7 des Durchbruches 6 im metallischen Bauteil 4 wird erreicht, dass die scharfkantig ausgebildete Umlaufkante 8 der Begrenzung der Durchbrüche 6 an der Unterseite 3 in die Kunststoffstruktur 1 eindringt und gegen Ende der Phase der Durchdringung durch die Kunststoffwandung 1.1 den erhöhten Widerstand der gegenüberliegend angeordneten Auftrefffläche 12 des oberen Fügewerkzeuges erfährt und sich in der Folge verformt. Je nach Anstellwinkel bzw. Länge der Überhöhung 7.1 in bezug auf die Wanddicke 1.1 kann sich eine Krümmung 17 des Randbereiches 7 des Durchbruches 6 einstellen, mit einer in der Mitte liegenden Aufweitung 18 sowie einer Einengung im oberen Bereich 19. Durch die verformte Kontur 17 verspannt bzw. verkrallt sich die stanzkragenartige Erhebung 7 in der Kunststoffwandung 1, wodurch eine dauerhafte, form- und kraftschlüssige Verbindung entsteht. Die Gestalt der durch die Fügeoperation verformten stanzkragenartigen Erhebung 7 kann zum einen durch den Anstellwinkel des unverformten Vorsprunges 7 und andererseits durch die Konfiguration des oberen Fügewerkzeuges 11 beeinflusst werden. Je nach Anstellwinkel des Vorsprungs 7 in seiner Mitte erfährt dieser entweder eine Aufweitung 18 oder eine Einengung 21 (vergleiche Figur 3).

Aus der Darstellung gemäß Figur 3 gehen ein Metall-Grundkörper und die Kunststoffstruktur im Bereich der Verbindungsstelle nach dem Fügen mit form- und kraftschlüssiger Verbindung hervor, wobei die stanzkragenartige Erhebung in ihrer Mitte eingeengt und am oberen Ende aufgeweitet ist.

In dieser Konfiguration hat die stanzkragenartige Erhebung 7 im Metall-Grundkörper 4 eine der Verformungskontur 17 in Figur 2 entgegengesetzte Geometrie erfahren. Auch in diesem Beispiel wird durch die über die Wandungsdicke 1.1 der Kunststoffstruktur 1 hervorstehende Höhe 7.1 der stanzkragenartigen Erhebung 7 erreicht, dass nach Auftreffen der Auftrefffläche 12 des oberen Fügewerkzeugs 11 eine Verkrallung bzw. vollständige Durchdringung und damit eine formschlüssige Verbindung zwischen Kunststoffstruktur 1 und metallischem Körper 4 erreicht wird.

Das Ausmaß der Aufweitung bzw. Einengung der stanzkragenartigen Erhebung 7 gemäß der Figuren 2 und 3 wird durch die Größe des Unterschiedes zwischen der Höhe 7.1 der stanzkragenartigen Ränder und der Wanddicke 1.1 der Kunststoffwand bestimmt. Damit steht ein weiterer Parameter zur Beeinflussung der Festigkeit der Verbindung zur Verfügung.

Aus der Darstellung gemäß Figur 4 geht ein Ausschnitt der oberen Hälfte des Fügewerkzeuges mit speziell konfigurierter Auftrefffläche 12 näher hervor. Gemäß dieses Ausführungsbeispiels kann in der Auftrefffläche 12 des oberen Fügewerkzeuges 11 eine in bezug auf die Mittellinie 10 symmetrische Ausnehmung in Gestalt einer Ringnut 22 in die Auftrefffläche 12 des Fügewerkzeuges 11 eingelassen sein. Wird ein Verbundbauteil mittels eines gemäß Figur 4 konfigurierten oberen Fügewerkzeuges 11 gefertigt, so stellen sich im Bereich der Oberseite 2 des in Wandungsdicke 1.1 ausgeführten Kunststoffbauteiles 1 Vorsprünge des metallischen Stanzkragens 7 ein, die über die Oberseite 2 der Kunststoffstruktur 1 hervortreten, d. h. nicht in dieser liegen und durch die Gestalt der Ringnut 22 umgeformt werden.

Aus der Darstellung gemäß Figur 5 geht ein Fügewerkzeug 11 näher hervor, dessen Auftrefffläche 12 entsprechend der in Figur 4 dargestellten Weise mit einer ringnutförmigen Ausnehmung 22 versehen ist.

Beim Zusammenpressen der einander gegenüberliegend angeordneten Fügewerkzeuge 11 und 13 erfolgt eine Durchdringung des in Wandungsdicke 1.1 ausgeführten Kunststoffbauteiles 1 durch die stanzkragenartig konfigurierte Erhebung 7 im Metallkörper 4 bzw. Metallblech 4, wobei überstehende Partien der stanzkragenartigen Erhebung 7 in die in Figur 4 dargestellte Ringnut 22 in der Auftrefffläche 12 des oberen Fügewerkzeugs 11 eingreifen. Aus der Darstellung gemäß Figur 5 geht hervor, dass die stanzkragenartig konfigurierten Erhebungen 7 des Metallbleches oder des Metallkörpers 4 in der Mitte des Durchbruches 6 eine mittige Einengung erfahren haben, während im oberen Bereich die überstehenden Partien 23 der stanzkragenartigen Erhebung 7 weiter auseinanderliegend, entsprechend der Geometrie der Ringnut 22 in der Auftrefffläche 12 des oberen Fügewerkzeuges 11 ausgebildet sind. Die Genauigkeit der Fügeoperation gemäß Figur 5 wird dadurch verbessert, dass das. Metallblech oder der Metallkörper 4 auf der entsprechenden Auftrefffläche 14 des unteren Fügewerkzeuges 13 spielfrei und mit gleichmäßiger Abstützung in der Umgebung der Fügestelle unterstützt ist. Gleiches gilt auch für die Anordnung des oberhalb des Metallkörpers bzw. Metallbleches 4 angeordneten Kunststoffbauteils 1 in bezug auf die Auftrefffläche 12 des oberen Fügewerkzeugs 11.

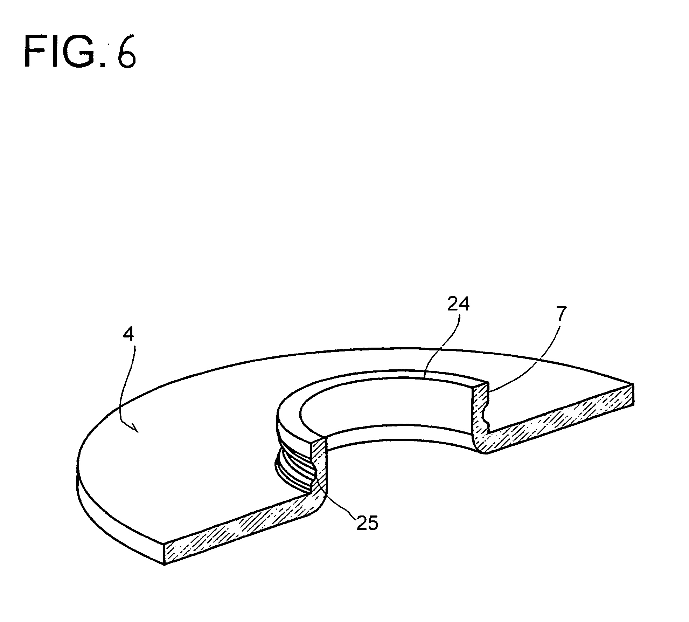

Figur 6 zeigt einen Stanzrand (7) mit kantigem Stanzrandende (24) auf einer Fläche eines Metallbauteils (4), die in Bezug auf die Metallfläche senkrecht oder nahezu senkrecht ausgerichtet ist, im Querschnitt. Der Stanzrand verfügt umlaufend auf seiner äußeren Seitenfläche über eine rillenartige Einschnürung/Vertiefung (25). Diese Einschnürung kann bereits beim Herstellen des Stanzkragens mit erzeugt oder auch nachträglich angebracht werden. Insbesondere warmes Kunststoffmaterial der mit dem Metallbauteil gefügten Kunststoffstruktur dringt in die Einschnürung ein und führt häufig zu einer besonders stabilen Verbindung.

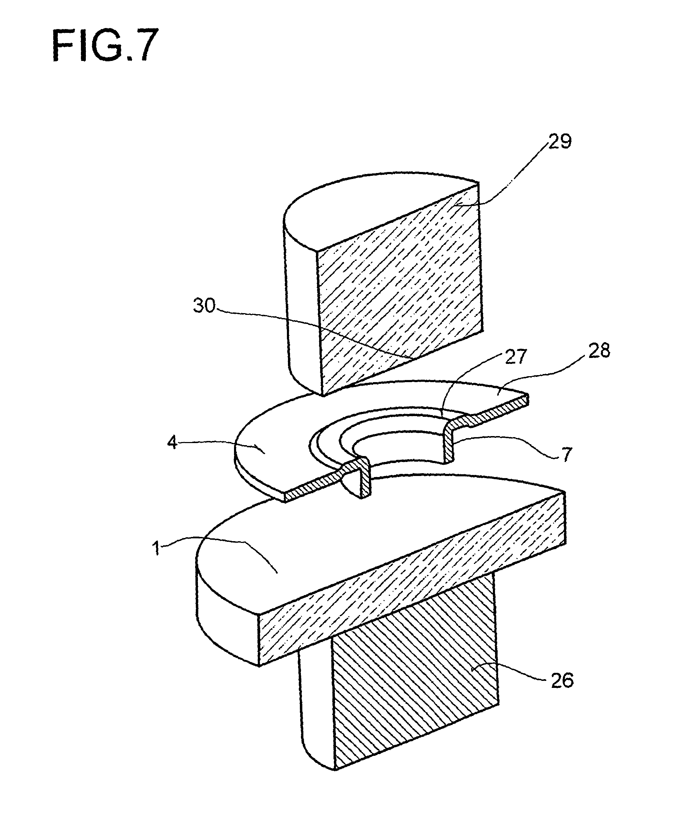

Figur 7 zeigt ein Metallbauteil (4) mit einem Stanzkragen (7) und eine Kunststoffstruktur (1), die auf einer unteren Fügewerkzeughälfte (26) aufliegt, kurz vor dem eigentlichen Fügevorgang. Im Bereich des Stanzkragens (7) ist die Metallfläche (27) gegenüber der durch das weiter außen liegende Metallblech (28) aufgespannten Fläche derart ausgelenkt, dass sie unmittelbar vor dem Fügevorgang einen größeren Abstand zu der durch die Kunststoffstruktur aufgespannten Fläche aufweist als die weiter außen liegende Metallblechfläche (28). Es handelt sich somit um eine Auslenkung der Fläche im Bereich des Stanzrandes in Richtung auf den Stanzrandsockel. Man verwendet für den Fügevorgang vorzugsweise rückseitig zum Metallbauteil ein Füge- bzw. Presswerkzeug (29), das diese Auslenkung der Metallfläche (27) im Bereich des Stanzkragens in seiner Oberflächenkontur (30) nicht aufnimmt. Dieses Presswerkzeug verfügt damit anders als das Metallbauteil zumindest im Bereich der Fügestelle über eine einheitliche Querschnittsform ohne Auslenkungen.

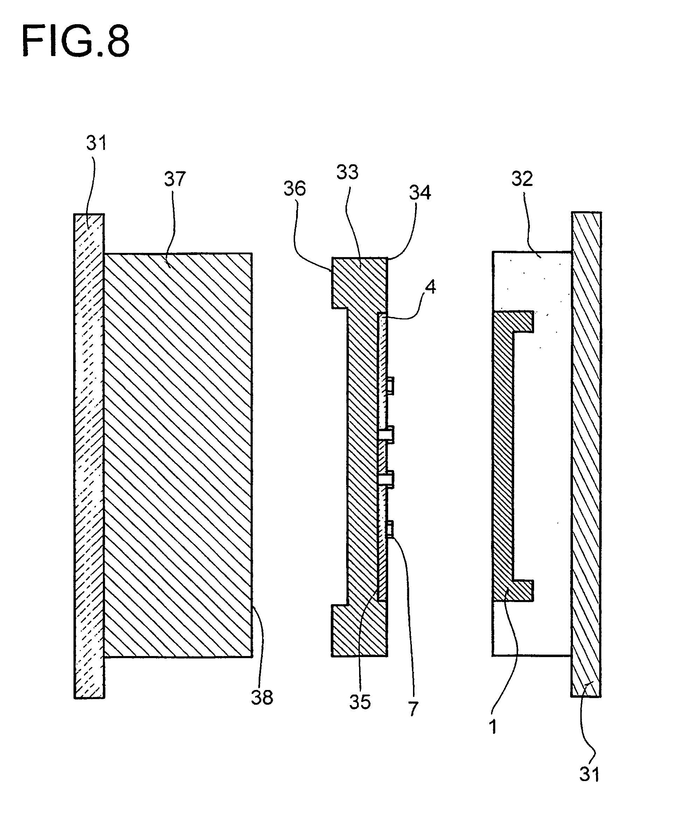

Figur 8 zeigt schematisch ein geöffnetes Spritzgießwerkzeug (31) im Querschnitt, bei dem die spritzgegossene Kunststoffstruktur (1) in der vorderseitigen Werkzeughälfte (32) verblieben ist. In dem geöffneten Werkzeug befindet sich das auf einer Matrize (33) vorliegende Metallbauteil (4), wobei die Stanzränder (7) der Kunststoffstruktur (1) zugewandt sind und einmal in Form von durch das Metall getriebenen Durchbrüchen (innenliegend in Fig. 8) sowie in Form von auf der Metalloberfläche angebrachten Stanzkragenerhebungen vorliegen. Unter Stanzrand oder Stanzkragen soll im Sinne der vorliegenden Erfindung sowohl eine auf einer Metallfläche angebrachte oder vorliegende Erhebung, wobei diese auch nachträglich um eine Öffnung oder einen Durchlass im Metall angebracht sein kann, als auch eine aus einem Metallblech mittels Ausstechens oder Ausstanzens unmittelbar erhaltene Erhebung, Rand oder Kragen verstanden werden. Die Vorderseite (34) der Matrize (33) nimmt die rückseitige Form (35) des Metallbauteils (4) auf, die Rückseite der Matrize (33) wird beim Fügevorgang durch die rückseitige Spritzgießwerkzeughälfte (37) abgestützt. Zu diesem Zweck können auch zusätzliche Auflagestempel (36) zum Beispiel an der Matrize zur Anlage an der Oberfläche (38) der rückseitigen Spritzgießwerkzeughälfte vorgesehen werden. Beim Zusammenfahren der Spritzgießwerkzeughälften (32, 37) bewegt die sich schließende rückseitige Werkzeughälfte (37) die Matrize (33) und damit auch die Metallstruktur (4) in Richtung auf die Kunststoffstruktur (1). Durch die Relativ- bzw. Gegenbewegung der Werkzeughälften wird unter Anwendung von Druck der/die Stanzkragen (7) des Metallbauteils (4) in die Kunststoffstruktur (1) eingepresst. Man erhält ein form- und kraftschlüssiges Verbundbauteil.

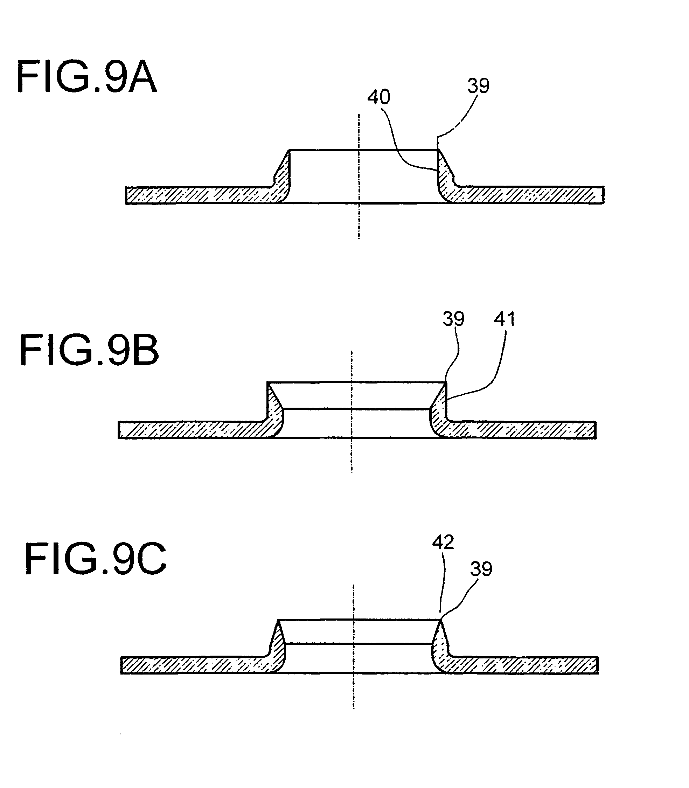

Figur 9 zeigt jeweils im Querschnitt schematisch scharfkantige Ausführungsformen eines umlaufenden Stanzkragens (7). In Ausführungsform a) befindet sich die scharfe Kante (39) am innenliegenden Rand (40), in b) am außenliegenden Rand (41) des Stanzkragens. Selbstverständlich kann das scharfkantig zulaufende Stranzkragenende auch in beliebigen Positionen zwischen dem durch die Ausführungsformen a) und b) vorgegebenen Bereich liegen, beispielsweise in zentraler Position (42) unter Ausbildung einer im Querschnitt symmetrisch geformten Kantenspitze (39) wie in c). Die beschriebenen Verbundbauteile können vielfältig eingesetzt werden, beispielsweise als Bauteile oder Bauteilekomponenten im Automobil-, Flugzeug- oder Schiffbau oder bei der Herstellung von Haushalts- oder Elektrogeräten. Anwendungen im Automobilbau stellen z.B. Frontendmodule, Frontendträger, Sitzschalen, Sitzstrukturen, Instrumententafeln, Türfunktionsträger, Türfunktionsmodule, Heckklappen oder Seitentüren dar.

Die vorgestellten Verbundbauteile haben gegenüber den bekannten, andersartig gemäß EP 0 370 342 B1 hergestellten Hybridbauteilen den Vorteil, dass die Kunststoffstruktur hier weitgehend frei von Restriktionen gestaltet werden kann, da die Kunststoffstruktur gemäß der vorliegenden Erfindung in einem separaten Produktionsschritt gefertigt werden kann. Im Unterschied dazu wird die Kunststoffstruktur gemäß EP 0 370 342 B1 an den metallischen, schalenförmigen Grundkörper angespritzt, wodurch die Freiheitsgrade bezüglich der Entformung der spritzgegossenen Kunststoffstruktur deutlich herabgesetzt werden. In der Folge kann die erfindungsgemäße Kunststoffstruktur belastungsgerechter gestaltet werden als solche aus dem Stand der Technik. Dieser Vorteil drückt sich im erhaltenen Verbundbauteil durch höhere Steifigkeit bzw. Festigkeit bei vergleichbarem Bauteilgewicht aus.

Von Vorteil ist weiterhin, dass sich, da keine zusätzlichen Verarbeitungsschritte, z.B. Klebeschritte, anfallen, kurze Zykluszeiten bei der Serienherstellung verwirklichen lassen. Des Weiteren sind keine zusätzlichen Bauteile oder Komponenten für das Fügen von Kunststoffstruktur und Metallbauteil erforderlich. Außerdem ist das erfindungsgemäße Verfahren in all seinen Ausführungsformen insgesamt unempfindlicher gegenüber Abweichungen bei der Positionierung von Stanzrand und Kunststoffstruktur. Bei dem Verfahren nach EP 0 370 342 B1 ist eine weitaus höhere Lagegenauigkeit einzuhalten, um zu funktionsfähigen Verbundbauteilen zu gelangen. Auch erfordert das erfindungsgemäße Fügeverfahren keine Nachbehandlung. Darüber hinaus können beliebige Kunststoffstrukturen, unabhängig vom Herstellprozess, verwendet werden, wobei auch faserverstärkte Kunststoffe gleichwertig geeignet sind. Beispielsweise liegen im Scherversuch bei einem Verbundbauteil mit einer Kunststoffstruktur aus glasfaserverstärktem (30 Gew.-%) Polyamid bei kreisförmigen Stanzrändern mit einem Durchmesser von 5 mm im Metallbauteil die Bruchkräfte je Verbindungsstelle bei etwa 1300 N. Außerdem ist es möglich, den Fügevorgang in demselben Spritzgießwerkzeug vorzunehmen, in dem man auch die zu fügende Kunststoffstruktur spritzgießt, wodurch z.B. eine separate Fügemaschine sowie zusätzliche Arbeitsschritte eingespart werden.

Von Vorteil ist schließlich auch, dass sich die erfindungsgemäße Fügetechnik in allen ihren Ausführungsformen leicht und unkompliziert mit bekannten Fügetechniken zur Herstellung von Hybridbauteilen, beispielsweise der in der EP-A 370 342 beschriebenen Anspritzvariante kombinieren lässt. Beispielsweise kann ein zunächst mit Hilfe des in der EP-A 370 342 beschriebenen Fügeverfahrens erhaltenes Verbundbauteil in einem Folgeschritt unter Anwendung des erfindungsgemäßen Verfahrens z.B. zu einer SandwichStruktur (Metall/Kunststoff/Metall) weiterverarbeitet werden. Bevorzugt wird bei dieser Kombination an Fügetechniken auch der Vorgang des Stanzfügens in dem ursprünglich für das Anspritzen des Kunststoffs an das Metallblech verwendeten Spritzgießwerkzeug, wie vorgehend bereits beschrieben, vorgenommen.

### Bezugszeichenliste

- 1: Kunststoffstruktur
- 1.1: Wanddicke
- 2: Oberseite
- 3: Unterseite
- 4: Metallkörper/Metallblech
- 5: Fügestelle
- 6: Durchbruch
- 7: stanzkragenartige Erhebung
- 7.1: Höhe des Vorsprungs
- 8: Umlaufkante
- 9: Kragenende
- 10: Mittellinie
- 11: oberes Fügewerkzeug
- 12: Auftrefffläche
- 13: unteres Fügewerkzeug
- 14: Auftrefffläche
- 15: verformter Kragenbereich
- 16: Versteifungsfläche
- 17: Krümmung
- 18: Aufweitung mittig
- 19: Einengung oben
- 20: Aufweitung oben
- 21: Einengung mittig
- 22: Ausnehmung oberes Fügewerkzeug 11
- 23: überstehende Partie
- 24: kantiges Stanzrandende
- 25: rillenartige Einschnürung/Vertiefung
- 26: untere Fügewerkzeughälfte
- 27: gegenüber umgebender Metallfläche in Richtung des Stanzkragensockels ausgelenkte Metallfläche
- 28: Metallfläche des Metallbauteils, die die ausgelenkte Metallfläche umgibt
- 29: Presswerkzeug
- 30: Oberflächenkontur des Presswerkzeugs
- 31: Spritzgießwerkzeug
- 32: vorderseitige Spritzgießwerkzeughälfte
- 33: Matrize
- 34: Vorderseite der Matrize
- 35: rückseitige Form des Metallbauteils
- 36: auf Rückseite der Matrize angebrachte Auflagestempel
- 37: rückseitige Spritzgießwerkzeughälfte
- 38: Oberfläche der rückseitigen Werkzeughälfte
- 39: scharfkantiges Ende des Stanzkragens/Kantenspitze
- 40: innenliegender Rand des Stanzkragens
- 41: außenliegender Rand des Stanzkragens
- 42: Kantenspitze in zentraler Stanzrandposition

## Patentansprüche

1. Verfahren zur Herstellung eines Verbundbauteiles aus einem Metallbauteil (4) und einer Kunststoffstruktur (1), **dadurch gekennzeichnet, dass** man das Metallbauteil, das über mindestens eine Fläche mit mindestens einem Stanzrand oder Stanzkragen (7) verfügt, und die Kunststoffstruktur mit Hilfe eines oder mehrerer Fügewerkzeuge (11, 13, 26, 29, 32, 37) zusammenpresst, wobei der Stanzrand/-kragen form- und kraftschlüssig in die Kunststoffstruktur eindringt oder diese durchdringt.

2. Verfahren zur Herstellung eines Verbundbauteiles aus einem Metallbauteil (4) und einer Kunststoffstruktur (1), **dadurch gekennzeichnet, dass** man die Kunststoffstruktur in einem Spritzgießwerkzeug (31) spritzgießt, das Spritzgießwerkzeug öffnet, in das geöffnete Spritzgießwerkzeug ein Metallbauteil (4), das über mindestens eine Fläche mit mindestens einem Stanzrand (7) verfügt, einführt und über bzw. vor der in der Spritzgießform verbliebenen Kunststoffstruktur positioniert und die Spritzgießwerkzeughälften (32, 37) zusammenfährt, wobei der bzw. die Stanzränder form- und kraftschlüssig in die Kunststoffstruktur eingepresst werden.

3. Verfahren nach Anspruch 2, **dadurch gekennzeichnet, dass** man in dem Spritzgießwerkzeug zwischen Metallbauteil (4) und rückseitiger Spritzgießwerkzeughälfte (37) eine Matrize (33) einführt und positioniert, die vorderseitig zumindest im Bereich der Fügestellen im wesentlichen der Kontur der Fläche des Metallbauteils entspricht.

4. Verfahren nach Anspruch 3, **dadurch gekennzeichnet, dass** die Rückseite der Matrize beim Zusammenpressen der Werkzeughälften (32, 37) an der rückseitigen Spritzgießwerkzeughälfte (38) oder an der Werkzeugaufspannplatte dieser Werkzeughälfte zur Anlage gelangt.

5. Verfahren nach den Ansprüchen 3 oder 4, **dadurch gekennzeichnet, dass** man Matrize (33) und Metallbauteil (4) außerhalb des Spritzgießwerkzeugs aufeinanderlegt und im Verbund in das geöffnete Spritzgießwerkzeug einführt und über bzw. vor der Kunststoffstruktur positioniert.

6. Verfahren nach den Ansprüchen 1 bis 5, **dadurch gekennzeichnet, dass** der Stanzrand im wesentlichen senkrecht auf der Metallfläche angebracht ist.

7. Verfahren nach den Ansprüchen 1 bis 6, **dadurch gekennzeichnet, dass** das Stanzrandende kantig, insbesondere scharfkantig ausgeformt ist.

8. Verfahren nach den Ansprüchen 1 bis 7, **dadurch gekennzeichnet, dass** die Höhe des Stanzrandes die Dicke der Kunststoffstruktur an der zu verbindenden Stelle um bis zu 40 % übersteigt.

9. Verfahren nach den Ansprüchen 1 bis 7, **dadurch gekennzeichnet, dass** die Höhe (7.1) der Erhebung bzw. des Stanzrandes (7) unterhalb der Wanddicke (1.1) der Kunststoffstruktur (1) liegt oder gleich der Wanddicke (1.1) der Kunststoffstruktur ist.

10. Verfahren nach einem der Ansprüche 1 bis 9, **dadurch gekennzeichnet, dass** der Stanzrand einen Stanzkragen eines Durchbruchs durch die Metallfläche des Metallbauteils darstellt.

11. Verfahren nach den Ansprüchen 1 bis 10, **dadurch gekennzeichnet, dass** die Erhebung bzw. der Stanzrand (7) auf mindestens einer Stanzkragenseitenfläche eine Einschnürung, Einbuchtung oder Vertiefung (25) aufweist.

12. Verfahren nach den Ansprüchen 1 bis 11, **dadurch gekennzeichnet, dass** die Fläche (27) des Metallblechs im Bereich um den Stanzrand/-kragen gegenüber der aus dem umgebenden Metallblech (28) aufgespannten Fläche in Richtung auf den Stanzkragensockel ausgelenkt ist, so dass die in Bezug auf die durch das umgebende Metallblech aufgespannte Fläche ermittelte Stanzrand-/kragenhöhe geringer ist als die tatsächliche, vom Stanzrand-/Stanzkragensockel ermittelte Höhe.

13. Verfahren nach den Ansprüchen 1 bis 12, **dadurch gekennzeichnet, dass** man die zu verbindenden Flächen von Metallbauteil und Kunststoffstruktur vor dem Fügevorgang partiell oder vollständig mit einem Kleber versieht.

14. Verfahren nach den Ansprüchen 1 bis 13, **dadurch gekennzeichnet, dass** man die gefügten Stellen im Bereich des Stanzkragensockels und gegebenenfalls im Bereich des Stanzkragendurchbruchs mit einem Kleber oder einer Abdichtmasse versieht.

15. Verfahren nach den Ansprüchen 1 bis 14, **dadurch gekennzeichnet, dass** die Kunststoffstruktur beim Fügevorgang in erwärmter Form vorliegt oder dass man das Verbundbauteil nach dem Fügevorgang tempert.

16. Verbundbauteile, erhältlich gemäß einem Verfahren nach den Ansprüchen 1 bis 15.

17. Verwendung von Verbundbauteilen gemäß Anspruch 16 als Bauteile oder Bauteilkomponenten im Automobil-, Flugzeug- oder Schiffbau oder bei der Herstellung von Haushalts- oder Elektrogeräten.

18. Verwendung nach Anspruch 17, wobei das Bauteil oder die Bauteilkomponenten für den Automobilbau Frontendmodule, Frontendträger, Sitzschalen, Sitzstrukturen, Instrumententafeln, Türfunktionsträger, Türfunktionsmodule, Heckklappen oder Seitentüren darstellen.

19. Frontendmodule, Frontendträger, Sitzschalen, Sitzstrukturen, Seitentüren, Instrumententafelträger, Türfunktionsträger, Türfunktionsmodule, Heckklappen, Waschmaschinen, Kühlschränke oder Spülmaschinen enthaltend ein Verbundbauteil gemäß Anspruch 16.

## Claims

1. A process for producing a composite structural element from a metal structural element (4) and a plastics structure (1), wherein the metal structural element, which has at least one surface with at least one punched rim or punched collar (7), and the plastics structure are pressed together with the aid of one or more joining tools (11, 13, 26, 29, 32, 37), the punched rim/collar penetrating into or through the plastics structure in a positively and nonpositively locking manner.

2. A process for producing a composite structural element from a metal structural element (4) and a plastics structure (1), wherein the plastics structure is injection-molded in an injection mold (31), the injection mold is opened, a metal structural element (4) which has at least one surface with at least one punched rim (7) is introduced into the opened injection mold and positioned over or in front of the plastics structure remaining in the injection mold, and the injection mold halves (32, 37) are moved together, the punched rim or rims being pressed into the plastics structure in a positively and nonpositively locking manner.

3. A process as claimed in claim 2, wherein a female die (33), which corresponds on the front side, at least in the region of the joining locations, substantially to the contour of the surface of the metal structural element, is introduced into the injection mold between the metal structural element (4) and the rear injection mold half (37) and is positioned.

4. A process as claimed in claim 3, wherein the rear side of the female die comes to bear against the rear injection mold half (38), or against the platen of this mold half, when the mold halves (32, 37) are pressed together.

5. A process as claimed in claim 3 or 4, wherein the female die (33) and metal structural element (4) are placed one on top of the other outside the injection mold and are introduced as a unit into the opened injection mold and positioned over or in front of the plastics structure.

6. A process as claimed in claims 1 to 5, wherein the punched rim is attached substantially perpendicularly on the metal surface.

7. A process as claimed in claims 1 to 6, wherein the end of the punched rim is edged, in particular sharply edged.

8. A process as claimed in claims 1 to 7, wherein the height of the punched rim exceeds the thickness of the plastics structure at the location to be connected by up to 40%.

9. A process as claimed in claims 1 to 7, wherein the height (7.1) of the elevation or of the punched rim (7) lies below the wall thickness (1.1) of the plastics structure (1) or is equal to the wall thickness (1.1) of the plastics structure.

10. A process as claimed in one of claims 1 to 9, wherein the punched rim represents a punched collar of an aperture through the metal surface of the metal structural element.

11. A process as claimed in claims 1 to 10, wherein the elevation or the punched rim (7) has a constriction, indentation or depression (25) on at least one punched collar side face.

12. A process as claimed in claims 1 to 11, wherein the surface (27) of the metal plate is deflected in the region around the punched rim/collar with respect to the surface defined by the surrounding metal plate (28) in the direction of the punched collar base, so that the height of the punched rim/collar determined with respect to the surface defined by the surrounding metal plate is less than the actual height determined by the punched rim/punched collar base.

13. A process as claimed in claims 1 to 12, wherein the surfaces to be connected of the metal structural element and the plastics structure are partially or completely provided with an adhesive before the joining operation.

14. A process as claimed in claims 1 to 13, wherein the joined locations are provided with an adhesive or a sealing compound in the region of the punched collar base and, if appropriate, in the region of the punched collar aperture.

15. A process as claimed in claims 1 to 14, wherein the plastics structure is in a warmed state during the joining operation or the composite structural element is heat-treated after the joining operation.

16. Composite structural elements which can be obtained by a process as claimed in claims 1 to 15.

17. The use of composite structural elements as claimed in claim 16 as structural elements or structural element components in automotive engineering or aircraft construction or shipbuilding or in the production of domestic or electrical appliances.

18. The use as claimed in claim 17, the structural element or the structural element components for automotive engineering taking the form of front-end modules, front-end supports, seat pans, seat structures, instrument panels, functional supports for doors, functional modules for doors, tailgates or side doors.

19. Front-end modules, front-end supports, seat pans, seat structures, side doors, instrument panel supports, functional supports for doors, functional modules for doors, tailgates, washing machines, refrigerators or dishwashers containing a composite structural element as claimed in claim 16.

## Revendications

1. Procédé de fabrication d'une pièce de construction composite à partir d'une pièce de construction métallique (4) et d'une structure en substance synthétique (1), **caractérisé en ce qu'**on presse l'une contre l'autre la pièce de construction métallique, qui dispose d'au moins une face ayant au moins un bord ou col estampé (7), et la structure en substance synthétique à l'aide d'un ou de plusieurs outils d'assemblage (11, 13, 26, 29, 32, 37), le bord/col estampé pénétrant dans la structure en substance synthétique ou traversant celle-ci de manière à former une liaison due à la forme et à une force.

2. Procédé de fabrication d'une pièce de construction composite à partir d'une pièce de construction métallique (4) et d'une structure en substance synthétique (1), **caractérisé en ce qu'**on coule par injection la structure en substance synthétique dans un outil de moulage par injection (31), on ouvre l'outil de moulage par injection, on introduit dans l'outil de moulage par injection ouvert une pièce de construction métallique (4), qui dispose d'au moins une face ayant au moins un bord estampé (7), on la positionne par-dessus ou respectivement devant la structure en substance synthétique restée dans le moule d'injection et on réunit les moitiés d'outil de moulage par injection (32, 37), le ou respectivement les bords estampés étant pressés dans la structure en substance synthétique de manière à former une liaison due à la forme et à une force.

3. Procédé suivant la revendication 2, **caractérisé en ce que**, dans l'outil de moulage par injection, on introduit et positionne entre une pièce de construction métallique (4) et une moitié d'outil de moulage par injection du côté arrière (37) une matrice (33) qui, du côté avant, correspond sensiblement au contour de la face de la pièce de construction métallique du moins dans la zone des emplacements de joint.

4. Procédé suivant la revendication 3, **caractérisé en ce que** le côté arrière de la matrice parvient, lors du pressage l'une contre l'autre des moitiés d'outil (32, 37), en appui sur la moitié d'outil de moulage par injection du côté arrière (38) ou sur le plateau mobile de cette moitié d'outil.

5. Procédé suivant les revendications 3 ou 4, **caractérisé en ce qu'**on superpose matrice (33) et pièce de construction métallique (4) à l'extérieur de l'outil de moulage par injection et **en ce qu'**on les introduit en combinaison dans l'outil de moulage par injection ouvert et les positionne par-dessus ou respectivement devant la structure en substance synthétique.

6. Procédé suivant les revendications 1 à 5, **caractérisé en ce que** le bord estampé est agencé sensiblement perpendiculairement à la face métallique.

7. Procédé suivant les revendications 1 à 6, **caractérisé en ce que** l'extrémité du bord estampé est façonnée avec arête, en particulier arête vive.

8. Procédé suivant les revendications 1 à 7, **caractérisé en ce que** la hauteur du bord estampé dépasse l'épaisseur de la structure en substance synthétique à l'endroit à relier d'environ jusqu'à 40%.

9. Procédé suivant les revendications 1 à 7, **caractérisé en ce que** la hauteur (7.1) de la surélévation ou respectivement du bord estampé (7) est inférieure à l'épaisseur de paroi (1.1) de la structure en substance synthétique (1) ou égale à l'épaisseur de paroi (1.1) de la structure en substance synthétique.

10. Procédé suivant l'une des revendications 1 à 9, **caractérisé en ce que** le bord estampé représente un col estampé d'un percement au travers de la face métallique de la pièce de construction métallique.

11. Procédé suivant les revendications 1 à 10, **caractérisé en ce que** la surélévation ou respectivement le bord estampé (7) présente, sur au moins une face latérale de col estampé, un rétrécissement, une indentation ou un évidement (25).

12. Procédé suivant les revendications 1 à 11, **caractérisé en ce que** la face (27) de la tôle métallique dans la zone autour du bord/col estampé est déviée par rapport à la face serrée de la tôle métallique environnante (28) en direction du socle du col estampé, de façon que la hauteur de bord/col estampé déterminée par rapport à la face serrée de la tôle métallique environnante soit moindre que la hauteur effective qui est déterminée depuis le socle de bord/col estampé.

13. Procédé suivant les revendications 1 à 12, **caractérisé en ce qu'**on dote partiellement ou totalement les faces à relier de la pièce de construction métallique et de la structure en substance synthétique d'une colle avant le processus d'assemblage.

14. Procédé suivant les revendications 1 à 13, **caractérisé en ce qu'**on dote d'une colle ou d'une masse d'étanchéité les emplacements de joint dans la zone du socle de col estampé et éventuellement dans la zone du percement du col estampé.

15. Procédé suivant les revendications 1 à 14, **caractérisé en ce que** la structure en substance synthétique se présente sous forme chauffée lors du processus d'assemblage ou **en ce qu'**on recuit la pièce de construction composite après le processus d'assemblage.

16. Pièces de construction composites, que l'on peut obtenir selon un procédé suivant les revendications 1 à 15.

17. Utilisation de pièces de construction composites suivant la revendication 16, comme pièces de construction ou composants dans la construction automobile, aéronautique ou navale ou pour la fabrication d'appareils ménagers ou électriques.

18. Utilisation suivant la revendication 17, dans laquelle la pièce de construction ou les composants pour la construction automobile représentent des modules d'extrémité avant, des poutres d'extrémité avant, des coques de siège, des structures de siège, des tableaux de bord, des supports fonctionnels de porte, des modules fonctionnels de porte, des hayons ou des portes latérales.

19. Modules d'extrémité avant, poutres d'extrémité avant, coques de siège, structures de siège, portes latérales, tableaux de bord, supports fonctionnels de porte , modules fonctionnels de porte, hayons, lave-linge, réfrigérateurs ou lave-vaisselle contenant une pièce de construction composite suivant la revendication 16.
